# EUROPÄISCHE PATENTSCHRIFT

(11) **EP 4 107 407 B1**
(45) Veröffentlichungstag und Bekanntmachung des Hinweises auf die Patenterteilung: **13.08.2025**
(21) Anmeldenummer: 21706838.6
(22) Anmeldetag: 15.02.2021
(51) Int. Cl.: F16F 7/10, F16F 9/02, F16F 9/04, F16F 9/56, F16F 9/54

(54) **ADAPTIVER SCHWINGUNGSTILGER ZUR DÄMPFUNG NIEDRIGER ERREGERFREQUENZEN**
ADAPTIVE TUNED MASS DAMPER FOR DAMPING LOW EXCITATION FREQUENCIES
AMORTISSEUR À MASSE ACCORDÉE ADAPTATIF POUR AMORTIR DES FRÉQUENCES D'EXCITATION RÉDUITES

(30) Priorität: 17.02.2020 EP 20000069; 16.11.2020 EP 20020532
(43) Veröffentlichungstag der Anmeldung: 28.12.2022
(73) Patentinhaber: FM Energie GmbH & Co. KG, 64646 Heppenheim (DE)
(72) Erfinder: MITSCH, Franz, 64646 Heppenheim (DE)
(74) Vertreter: Benz, Jürgen
(86) Internationale Anmeldenummer: PCT/EP2021/025055
(87) Internationale Veröffentlichungsnummer: WO 2021/164938

(56) Entgegenhaltungen:
- EP-A1- 2 097 279
- EP-A2- 2 378 118
- EP-A2- 2 522 850
- CN-Y- 200 949 272

## Beschreibung

Die Erfindung betrifft einen neuartigen frequenzadaptierbaren Schwingungstilger, der insbesondere zur Dämpfung von unterschiedlichen Schwingungen < 2 Hz, insbesondere < 1Hz, vorzugsweise < 0.5Hz geeignet ist, und somit vorzugsweise als Errichtungstilger beim Bau oder Aufstellen von hohen schlanken Strukturen, wie Türmen von Windkraftanlagen, aber auch als dauerhafter Tilger zum Einsatz kommen kann. Dokument CN200949272Y offenbart einen solchen Schwingungstilger.

Die Erfindung betrifft insbesondere einen Pendelschwingungstilger mit einem ersten Pendel an dem eine Schwingungsmasse befestigt ist und einem zweiten Pendel, welches von einer federartigen Stützvorrichtung unterschiedlicher Ausführung gebildet wird und mit einem Gas-Luftvolumen in der Weise betrieben wird, dass mit deren Hilfe auf die Gewichtskraft der Masse Einfluss genommen und somit die Frequenz des Schwingungssystem angepasst und eingestellt werden kann.

Hohe schlanke Strukturen sind gewöhnlich unterschiedlichen Kräften ausgesetzt, welche unterschiedliche Schwingungszustände hervorrufen, wodurch unterschiedliche Frequenzen gedämpft werden müssen. Dies ist insbesondere bei der Errichtung einer hohen schlanken Struktur der Fall. Der Bau einer hohen schlanken Struktur, wie beispielsweise eine aus Turm, Gondel und Rotorblätter bestehenden Windkraftanlage kann sich leicht über einen längeren Zeitraum hinziehen, so dass wetterbedingte oder aus anderen Gründen auftretende Erregungszustände zu unerwünschten Schwingungen der im Bau befindlichen Anlage führen können.

So hat zum Beispiel der Turm einer Windkraftanlage alleine eine Eigenfrequenz bis ca. 0,6 Hz. Eine komplett errichtete Windkraftanlage hat dagegen Eigenfrequenzen von nur noch weniger als 0,15 Hz. Solche niedrigen Frequenzen können mit üblich Pendel-Schwingungstilgern mit ihren schweren Massen und üblichen Längen der Pendelseile- oder Pendelstangen in der Regel nicht oder nur mit großem Aufwand erreicht werden..

Zum Erreichen von kleinen Frequenzen gibt es die Möglichkeit, eine Masse zwischen radial angeordneten Federn hin und her rollen zu lassen. Dies ist mit einem Rollwagen in eine Richtung- und in zwei Richtungen mit Kugelrollen möglich. Allerdings muss dazu die Steifigkeit der radialen Federn geändert bzw. angepasst werden, was mit einigem Aufwand verbunden ist. Verwendet man hingegen bei einem Schwingungstilger ein konventionelles Pendel so würde die erforderliche Pendellänge zum Erreichen von Frequenzen kleiner als 0,15 Hz bereits mehr als 11 m betragen, was in der Praxis nur mit großem Aufwand und Platzbedarf zu realisieren ist.

Eine weitere Möglichkeit, derart niedrige Frequenzen bei Schwingungsdämpfern anzusprechen, ist die Verwendung von Impulsdämpfern. Diese benötigen jedoch etwa die dreifache Masse wie Pendeltilger und müssen zum Erreichen der kleinen Frequenzen auf Laufrollen bewegt werden, was den Einsatz von verschleißanfälligen Kugelrollen nötig machen würde. Außerdem muss ein solcher Impulstilger für diese kleinen Frequenzen exakt in der horizontalen ausgerichtet werden, was in der Praxis nur bedingt möglich ist, da eine Schiefstellung, welche die Funktion erheblich stören würde, nicht immer vermieden werden kann. Da bei kleinen Frequenzen nur kleine Beschleunigungen erreicht werden bzw. vorliegen, kann die Schwingung mit einem Impulsdämpfer nicht so weit reduziert werden, wie das mit Pendeltilgern üblicherweise der Fall ist.

Es bestand somit die Aufgabe, einen Schwingungstilger für ausreichend große Massen aber mit möglichst kleinem Schwingungswegen bereitzustellen, welcher in der Lage ist, veränderliche niedrige Frequenzen unter 2 Hz, vorzugsweise unter 0,5 Hz anzusprechen und zu dämpfen.

### Zusammenfassung der Erfindung

Die Aufgabe wurde gelöst durch die Bereitstellung eines Pendel-Schwingungstilgers, bei dem erfindungsgemäß die Gewichtskraft der Pendelmasse während der Pendelbewegung durch ein eigens entwickeltes Stützfederelement objektiv oder relativ vermindert oder erhöht und somit gezielt an die Eigenfrequenz des Schwingungssystems angepasst werden kann.

Ein Pendel funktioniert aufgrund der einwirkenden Schwerkraft auf die Masse. Je höher die durch die Schwerkraft bedingte Gewichtskraft ist, umso höher ist -bei gleicher Pendellängedie Eigenfrequenz. Ebenso ist bei gleicher Masse (Gewichtskraft) die Frequenz umso höher, je kürzer die Pendellänge ist. Um die Gewichtskraft einer bestimmten Pendelmasse zu reduzieren, ist es erforderlich, die Masse kontinuierlich über den gesamten Schwingweg mit nur minimalem Einfluss sonstiger Kräfte anzuheben, um das Gewicht zu entlasten. Damit kann eine selektive Absenkung der Eigenfrequenz des Schwingungssystems erreicht werden. Dies geschieht erfindungsgemäß durch ein von unten oder ggf. von oben auf die PendelMasse einwirkendes Gegenpendel, wie im Folgenden beschrieben. Umgekehrt ist es mit Hilfe des erfindungsgemäßen Pendel-Schwingungstilger bei Bedarf auch möglich, die Gewichtskraft der Pendel-Schwingungsmasse zu erhöhen, um so die Eigenfrequenz des Schwingungssystems gezielt anzuheben.

Der erfindungsgemäß Pendel-Schwingungstilger lässt sich also steuerbar auf die jeweilige Eigenfrequenz des Schwingungssystems einstellen, insbesondere bei hohen schlanken

Strukturen, wobei insbesondere Frequenzen von < 2Hz, beispielsweise zwischen 0,15 bis 1.5 Hz von Bedeutung sind.

Gegenstand der Erfindung ist somit ein adaptiver Pendel-Schwingungstilger zur anpassbaren Dämpfung von auftretenden Schwingungen niedriger Frequenzen < 2 Hz, vorzugsweise < 1.5 Hz, in hohen schlanke Strukturen, umfassend
(i) mindestens eine im betriebsfreien Zustand senkrecht angeordnete erste Pendelstange (4) mit einer Länge (4.1), welche mit ihrem einen Ende über ein Gelenk (4.2) unmittelbar oder über ein Trägerelement (6) mit der zu dämpfenden Struktur verbunden ist,
(ii) mindestens eine im betriebsfreien Zustand senkrecht angeordnete zweite Pendelstange (5) mit einer Länge (5.1), welche ganz oder teilweise unterhalb oder oberhalb der ersten Pendelstange (4) angeordnet und mit ihrem einen Ende über ein Gelenk (5.3) unmittelbar oder über ein Trägerelement (6) mit der zu dämpfenden Struktur verbunden ist,
   wobei besagte erste Pendelstange (4) an ihren freien Ende (4.3) über ein gemeinsames freibewegliches Gelenk (4.3)(5.2) direkt oder indirekt mit dem freien Ende (5.2) der zweiten Pendelstange (5) verbunden ist,
(iii) eine Schwingungsmasse (1), welche an der ersten Pendelstange (4) befestigt ist, so dass bei Krafteinwirkung auf die Masse (1) beide
   Pendelstangen (4)(5) zusammen bewegt werden, und
(iv) eine Druck beaufschlagte und druckkontrollierte Stützvorrichtung (7), welche die Gewichtskraft der Schwingungsmasse (1) durch Anheben oder Absenken , bzw. Entlasten oder Belasten zu erhöhen oder zu vermindern vermag und so gezielt Frequenzänderungen erreicht werden können, wobei die Stützvorrichtung integraler Bestandteil der zweiten Pendelstange (5) ist, bzw. die Stützvorrichtung als Pendelstange fungiert.

In einer bevorzugten Ausführungsform der Erfindung wird die Stützvorrichtung (7) durch ein unter Druck stehendes Gas- / Luftvolumen (7.6) betrieben, wobei der Druck so gewählt ist, dass er eine bestimmte Gewichtskraftänderung der Schwingungsmasse (1) bewirkt, also diese um einen bestimmten Betrag anhebt oder absenkt, bzw. entlastet oder belastet. Das Gas- Luftvolumen (7.6) befindet sich in einem Gas-/Luft-Behälter (7.5), der entweder integraler Bestandteil der Stützvorrichtung ist, oder aber, falls das verfügbare Volumen hierfür nicht ausreicht in einem separaten Behälter außerhalb der eigentlichen Stützvorrichtung (7) angebracht ist. In dem letzteren Fall ist der separate Behälter durch entsprechende Leitungen / Schläuche (7.10)(7.14)(7.15)(7.17)(7.18) mit der eigentlichen Stützvorrichtung (7) verbunden.

Erfindungsgemäß ist die Stützvorrichtung vorzugsweise eine Luftfederelement (7.1) oder eine Pneumatik-Zylinder (7.2), wobei der Pneumatik-Zylinder hier wie eine Luftfeder wirkt. Die Luftfedereinheit (7.1) kann ein elastischer Balg (7.1.1) bzw. eine Anordnung von mehreren übereinander gestapelten elastischen Bälgen mit vorzugsweise kleinem Querschnitt, oder aber ein Roll-Balg (7.1.2) sein.

Vorzugsweise wird die Luftfedereinheit (7.1) durch einen Pneumatik-Zylinder (7.2) mit einem separaten Gas-/Luftvolumen / - Behälter (7.6)(7.5) repräsentiert.

Generell ist es vorteilhaft, das gesamte Gasvolumen (7.6) so ausreichend groß zu wählen, dass bei Betrieb des Schwingungstilgers maximal 10%, vorzugsweise nicht mehr als 5 - 8% des gesamten verfügbaren Volumens durch die die Stützvorrichtung bei einer Pendelbewegung verdrängt bzw. verschoben werden. Je weniger Volumen (7.6) während des Betriebes verschoben wird, umso besser ist dies für die Funktion des Schwingungstilgers bzw. für die selektive Frequenzanpassung. Es ist für die Wirkung des Tilgers also förderlich, wenn das Volumen im Gasbehälter (7.5) möglichst groß ist im Vergleich zum verdrängten Volumen durch die Stützvorrichtung (7). Als Behälter (7.5) ist hierbei der gesamte Raum, den das Gas (7.6) einnimmt, zu verstehen, also in der eigentlichen Stützvorrichtung selbst, sowie ggf. in einem davon separaten Behälter.

Im Falle eines elastischen Balges als Luftfedereinheit (7.1) kann es daher vorteilhaft sein, wenn bei Pendelbewegung des Tilgers die Luftfedereinheit mehrere, beispielsweise eine Anordnung von drei bis zehn, aufeinander gestapelten elastischen Bälgen (7.1.1) umfasst, deren Querschnitt möglichst klein im Verhältnis zum gesamten Gasvolumen (7.6) ist. Gegebenenfalls kann zu diesem Zweck noch ein Zusatzbehälter außerhalb der Stützfedereinheit (7) vorgesehen sein, um zur relativen Verringerung des verdrängten Volumens zum Gesamtvolumen beizutragen.

In einer vorteilhaften Ausführungsform der Erfindung umfasst der erfindungsgemäße Pendel-Schwingungstilger eine Druckregeleinheit (7.11), die ggf. automatisch und mit entsprechenden Sensoren ausgerüstet, betrieben wird, wodurch Druckschwankungen, die durch geänderte äußere Bedingungen während des Betriebes verursacht werden, durch Erhöhung oder Absenkung des Gas/-Luftdruckes (7.6) im Behälter (7.5) durch Gas- / Luftzufuhr oder Auslass über entsprechende Anschlüsse (7.10) ausgeglichen werden können. Damit kann die Eigenfrequenz des Schwingungstilgers bzw. des Schwingungssystems an die geänderten Bedingungen angepasst werden. Dabei ist es sinnvoll, eine automatische Anpassung des Druckes durch das System nur dann durchführen zu lassen, wenn ein bestimmter voreingestellter Maximal- oder Minimaldruck überschritten wird.

Es hat sich als vorteilhaft gezeigt, wenn die Längen (4.1)(5.1) der beiden miteinander verbundenen Pendelstangen (4)(5) unterschiedlich sind. Vorzugsweise ist dabei die Länge (4.1) der mindestens einen ersten, beispielsweise oberen, Pendelstange (4) kleiner ist als die Länge (5.1) des zweiten, beispielsweise unteren, Pendelstange (5), bzw. der Stützvorrichtung (7). Vorzugsweise ist also die zweite (untere) Pendelstange (5), bzw. die Stützvorrichtung (7) oder die Stützfedereinheit (7.1), 1.5- bis 2-fach, oder 50 - 100% länger sein als die mindestens eine erste Pendelstange (4).

In einer Ausführungsform der Erfindung stellt die mindestens erste Pendelstange (4) ganz oder teilweise ein oberes Pendel und die mindestens zweite Pendelstange (5) ganz oder teilweise ein unteres Pendel dar, und beide Pendelstangen sind über ein gemeinsames Gelenk (4.3)/(5.2) miteinander verbunden.

Alternativ stellt die mindestens erste Pendelstange (4) ganz oder teilweise ein unteres Pendel, und die mindestens zweite Pendelstange (5) ganz oder teilweise ein oberes Pendel dar, und beide Pendelstangen sind über ein gemeinsames Gelenk (5.2)/(4.3) miteinander verbunden.

Es hat sich weiterhin gezeigt, dass der erfindungsgemäße Pendel-Schwingungstilger sich besonders gut und selektiv an eine niedrige Frequenz adaptieren lässt, wenn die Schwingungsmasse (1) an der Pendelstange (4) so positioniert ist, dass sich der Schwerpunkt der Masse (2) in der Nähe des Gelenkes (4.3)(5.2) befindet oder mit dessen Position zusammenfällt.

Vorzugsweise ist die Schwingungsmasse (1) so gestaltet, dass die Stützvorrichtung (7), bzw. die Luftfedereinheit / Stützfedereinheit (7.1) zumindest teilweise von der Schwingungsmasse unter Erhaltung der freien Beweglichkeit der zweiten Pendelstange (5)(5.1) umgeben ist. Dies kann durch eine entsprechend positionierte Aussparung, bzw. einen Freiraum (8) an der Schwingungsmasse (1) erreicht werden, in welche die Stützvorrichtung (7) zumindest mit ihrem oberen Teil soweit hineinragt, dass, wie oben erwähnt, das Gelenk (5.2)(4.3) der Pendelstange (5)(5.1) im Bereich des Schwerpunktes (2) der Schwingungsmasse (1) positioniert ist. Um Platz zu sparen, kann die Luftfedereinheit / Stützfedereinheit (7.1) an dem Ende, welches zum Gelenk (5.2) gerichtet ist, verjüngt sein, so dass sie in eine kleinere Aussparung (8) in der Schwingungsmasse (1) gut hineinpasst.

Im Folgenden wird der Begriff Stützfedereinheit synonym für die Luftfedereinheit (7.1) verwendet.:
Die Erfindung betrifft auch einen vorzugsweise zweidimensional wirksamen, adaptiven Pendel-Schwingungstilger für hohe schlanke Strukturen, beispielsweise Türme von Windkraftanlagen, zur Dämpfung von auftretenden Schwingungen kleiner Frequenzen, insbesondere im Bereich von 0,1 bis 1,5 Hz, vorzugsweise 0.1 bis 1.0 Hz, welcher folgende Elemente insbesondere umfasst:
(i) eine Schwingungsmasse (1)
(ii) mindestens eine im betriebsfreien Zustand senkrecht angebrachte erste, vorzugsweise obere Pendelstange (4)(4.1) mit einem oberen gelenkigen Befestigungspunkt (4.2) und einem unteren Befestigungspunkt (4.3), an dem die Schwingungsmasse (1) je nach Ausführungsform starr oder ggf. gelenkig angebracht ist,
(iii) optional ein mindestens eine Dämpfungseinheit (3), beispielsweise ein elastischer, pneumatischer hydraulischer, oder magnetischer Dämpfer, und
(iv) mindestens eine als Stützfedereinheit (7.1) ausgebildete Stützvorrichtung (7), welche Bestandteil einer zweiten, vorzugsweise unteren Pendelstange (5)(5.1) ist und mit der Schwingungsmasse (1) an der ersten Pendelstange funktionell in Verbindung steht und ganz oder teilweise unterhalb der Masse (1) angeordnet ist, wobei die beiden Pendelstangen über ein gemeinsames Gelenk (4.3)(5.2) miteinander verbunden sind.

In dieser Ausführungsform der Erfindung umfasst die Stützfedereinheit (7.1) folgende Elemente: (a) einen integrierten druckfesten Gas- oder Luft-Behälter oder -Speicher (7.5) zur Aufnahme eines Gas- / oder Luftvolumens (7.6) mit einer Ein-/Auslassvorrichtung (7.10); (b) ein elastischer Balg (7.1.2) oder eine Anordnung übereinandergestapelten elastischen Bälgen zur Erzeugung einer Hubkraft oder ggf. Senkkraft , welche mit dem Gasvolumen (7.6) in Verbindung steht und entsprechend des voreingestellten Gasdruckes ihre Steifigkeit und Größe ändert, wobei der Gasdruck im Behälter (7.5) und in der Luftfedereinheit so eingestellt ist, dass die Schwingungsmasse (1) im Vergleich zum druckfreien oder druckreduzierten Zustand beispielsweise durch Erhöhung des Luftdruckes und damit der Hubkraft der Luftfedereinheit (7.1) in vertikal, bzw. in Richtung der Schwingungsmasse (1) entlastet wird, wodurch sich deren Gewichtskraft abhängig in Abhängigkeit vom voreingestellten Druck verringert, und (c) ein oberes freibewegliches Gelenk (5.2).

Diese Gelenk stellt im Prinzip das obere Gelenk der in dieser Ausführungsform unteren Pendelstange dar, die hier durch das Stützfedereinheit (7.1) repräsentiert wird, und ist andrerseits identisch mit dem Gelenk (4.3) der hier oberen Pendelstange (4). Die beiden Pendelstangen sind also auch hier durch ein gemeinsames freibewegliches Gelenk (4.3)(5.2) miteinander verbunden.

Die Stützvorrichtung (7) bzw. die Stützfedereinheit (7.1), bzw. die hier untere Pendelstange (5) besitzt weiterhin ein unteres Gelenk (5.3), welches mit einem Trägerelement (6) der hohen und schlanken Struktur verbunden ist. Diese Gelenk (5.3) kann als Kugelgelenk oder auch als Kardangelenk ausgebildet sein. Die Stützfedereinheit (7) stellt in dieser Ausführungsform somit funktionell eine zweite Pendelstange (5)(5.1) dar, welche mit der ersten Pendelstange (4)(4.1), an der die Masse (1) befestigt ist, mitbewegt wird.

Der erfindungsgemäße Pendel-Schwingungstilger umfasst in dieser Ausführungsform also mindestens eine erste obere starre Pendelstange (4) an welcher die Masse (1) befestigt ist und eine im Wesentlichen unterhalb der Masse (1) wirkende zweite untere Pendelstange (5) in Form der genannten, eine Hubkraft erzeugende Stützfedereinheit (7), die zusammen mit der schwingenden Masse (1) mitgeführt und bewegt wird.

In einer weiteren Ausführungsform der Erfindung ist der erfindungsgemäße Schwingungstilger als Transversal-Pendeltilger ausgebildet. Ein derartiger Schwingungstilger weist, sofern er zweidimensional wirksam sein soll, drei oder mehrere erste obere oder untere Pendelstangen (4) auf, an denen die Schwingungsmasse (1) im Bereich des jeweils unteren oder oberen Gelenks (4.3) aufgehängt ist, und die Masse (1) mit der zweiten unteren oder oberen Pendelstange (5), mit der Luftfeder- / Stützfeder- Einheit (7), über das obere oder untere Gelenk (5.3) verbunden ist, so dass die Schwingungsmasse (1) bei der Pendelbewegung horizontal bewegbar ist.

Die erfindungsgemäßen Schwingungstilger weisen vorzugsweise zusätzlich eine oder mehrere Dämpfungseinheiten (3) auf. Dabei können hydraulische, pneumatische, elastische oder auch magnetische Dämpfer zum Einsatz kommen, welche an sich im Stand der Technik bekannt sind. Im konkreten Fall haben sich Rotationsdämpfer, insbesondere magnetische Rotationsdämpfer, als besonders geeignet gezeigt . Entsprechende (magnetische) Rotationsdämpfer sind zum Beispiel in der WO 2017/036581, in der WO 2019/154557 oder in der WO 2019/029839 beschrieben.

In einer oben erfindungsgemäßen Ausführungsform ist die Dämpfungseinheit (3) im oder am Gelenk (4.2) des Pendels (4) angebracht . Vorteilhafterweise kann hier ein Kardangelenk mit integrierter Dämpfungseinheit, wie dies in der WO 2019/201471 beschrieben ist, eingesetzt werden.

Weitere Dämpfungseinheiten (3) können in Anzahl und Stärke auch am Umfang der Schwingungsmasse in der Weise angebracht werden, dass sie Schwingungen aus allen Richtungen der horizontalen Ebene des erfindungsgemäßen Schwingungstilgers dämpfen können. Bei den beschriebenen Transversal-Pendeltilgern ist das Anbringen der Dämpfungseinheiten (3) zwischen Masse (1) und Trägereinheit (6) sinnvoll.

Die erfindungsgemäßen Schwingungstilger sind insbesondere vorgesehen, bei der Errichtung oder dem Rückbau der hohen schlanken Strukturen eingesetzt zu werden. Insbesondere, bei der der Errichtung von Türmen bzw. Turmsegmenten im Windkraftanlagebau treten je nach Baufortschritt Schwingungen im niedrigen Frequenzbereich von unter 2 Hz, insbesondere im Bereich zwischen 1 und 1.5 Hz, auf. Da der Zusammenbau der Anlagen sich oft über einen längeren Zeitraum hinzieht, ist eine Schwingungsdämpfung in dieser Zeitspanne sehr sinnvoll. Nach Errichtung der vollständigen Anlage kann auf so einen Schwingungstilger dann oft verzichtet werden, auch wenn er prinzipiell im Anlagenbetrieb einsetzbar ist.

Es wird daher vorgesehen, einen erfindungsgemäßen Schwingungstilger zur Verfügung zu stellen, welcher an einer mobilen Trägerkonstruktion (6) angebracht ist, die wiederum an einer Struktur, z.B. am Turm einer Windkraftanlage, während ihrer Errichtung oder des Rückbaus reversibel befestigt oder entfernt werden kann. Dazu wird erfindungsgemäß vorgeschlagen, die zu dämpfende Struktur, bzw. das entsprechende Teil oder Segment der Struktur mit einer Befestigungsvorrichtung für den erfindungsgemäßen Pendel Schwingungstilger auszustatten. In einer Ausführungsform kann diese Befestigungsvorrichtung eine einfache Einhängekonstruktion sein, welche in fester Verbindung mit der zu dämpfenden Struktur steht.

Im Kern ist also die Stützvorrichtung (7) für die Änderung der Gewichtskraft der Schwingungsmasse (1) verantwortlich. Die Stützvorrichtung kann in einer besonderen bereits oben umrissenen Variante als Teil des erfindungsgemäßen Pendel-Schwingungstilgers als eigenständig innovativ bezeichnet werden.

Gegenstand der Erfindung ist somit eine Stützfedervorrichtung für eine Masse mit durch Gasdruck adaptierbarer Hubkraft, umfassend
(a) einen ersten, ggf. gelenkigen Anbindungspunkt für eine ihrer Gewichtskraft zu verändernde Masse (1) und einen zweiten gegenüberliegen, ggf. gelenkigen Anbindungspunkt für eine Trägerstruktur (6); wobei zwischen den beiden Anbindungspunkten die Elemente der Merkmale (b) - (d), und oberhalb und unterhalb die Masse (1) und die Trägerstruktur (6) angeordnet sind,
(b) mindestens einen druckfesten Behälter (7.5), welcher ein Gas- oder Luftvolumen (7.6) enthält, das durch eine Ein-/Auslassvorrichtungen (7.10) zu- oder abgeführt werden kann, wobei der Behälter vorzugsweise als Teil der Stützvorrichtung ausgebildet,
(c) mindestens ein elastisches Luftfederelement (7.1)(7.1.1)(7.1.2) oberhalb oder unterhalb des Behälters (7.5), welches mit dem Gasvolumen im Behälter (7.5) in funktioneller Verbindung steht und entsprechend des voreingestellten Gasdruckes seine Steifigkeit und Größe ändert, wodurch eine Erhöhung oder ein Absenken und damit eine Änderung der Hubkraft des Luftfederelements entlang der Längsachse der Stützvorrichtung (7) und damit ein Anheben oder Absenken der Masse (1) bewirkt wird,
(d) eine Führungsstange (7.4) zur Führung und Halterung des Gas- / Luftbehälters (7.5) und des elastischen Luftfederelements (7.1) 7.1.1)(7.1.2), wobei die Führungsstange zwischen Luftfederelement (7.1)(7.1.1)(7.1.2) und Gas- / Luftbehälter (7.5) ein Gleitlager (7.3) aufweist, so dass sich der Gas- / Luftbehälter (7.5) durch Änderung der Hubkraft des Luftfederelements entsprechend vertikal entlang der Führungsstange bewegen und somit auf die Gewichtskraft der Masse Einfluss nehmen kann, und optional
(e) eine Druck-Regel- und Steuereinheit (7.11)(7.12) zur Anpassung des Gas-/ Luftdruckes.

Für die Größe des Gas- / Luftbehälters und die Funktion des Bauteils gelten die gleichen Angaben, wie sie oben im Zusammenhang mit dem Schwingungstilger gemacht wurden. Ein solche Stützfedervorrichtung kann für vielerlei Zwecke eingesetzt werden.

### Einzelheiten der Erfindung und Beschreibung der Abbildungen

Wie bereits einleitend erläutert, ist es erforderlich, um die Gewichtskraft einer bestimmten Pendelmasse beispielsweise zu reduzieren und damit die Frequenz, die Masse kontinuierlich über den gesamten Schwingweg mit nur minimalem Einfluss sonstiger Kräfte anzuheben, bzw. zu entlasten. Dies geschieht erfindungsgemäß durch ein beispielsweise von unten auf die Masse einwirkendes Gegenpendel (5). Dieses Gegenpendel ist als Stützvorrichtung (7) oder mindestens als Luftfedereinheit (7.1) konzipiert und ausgeführt.

Dabei bietet sich die Verwendung einer Luftfedereinheit (7.1) in Form eines luftgefüllten elastische Balges, oder eines Pakets aus gestapelten elastischen Bälgen (7.1.1), oder als Pneumatik-Zylinder (7.1.2). Aber auch eine Federeinheit aus Stahlbälgen ist einsetzbar.

Es ist jedoch zu beachten, dass sich bei Verwendung eines mit Gas (zum Beispiel Luft) gefüllten und geschlossenen Balges die Kraft während des Schwingweges ändert, was einer Feder gleicht, wodurch sich die Schwingfrequenz im gleichen Maße wieder erhöht.

Deshalb wird erfindungsgemäß eine entsprechende Luftfeder eingesetzt, welche mit einem Luft- oder Gasvolumen in Verbindung steht und durch Gas- / Luftzufuhr komprimiert werden kann. Ist das Luftvolumen gegenüber dem Volumen der Luftfedereinheit groß genug, hat die Komprimierung der Luft keinen nennenswerten Einfluss mehr.

Wird das gesamte Luftvolumen V der Stützfedereinheit, welches sich aus dem Volumen des Gasspeichers V1 und dem von der Luftfeder verdrängten Volumen V2 zusammensetzt, im Vergleich zum verdrängten Volumen V2 sehr groß, so nähert sich der Quotient aus (V1 + V2) / V1 der Zahl 1, sodass die Komprimierung der Luft keinen bzw. nur einen kleinen Einfluss auf die vorhandene Steifigkeit der Stützfeder hat. Durch Erhöhung von V1 nimmt bei gleichem V2 der Quotient kleiner Werte an. Werden zum Beispiel 4 L durch die Pendelbewegung verdrängt, und der Inhalt des Tanks beträgt 80 L so ist (V1 + V2) / V1 = 84/80 = 1,05, was einer ausreichend kleinen Kraftamplitude entspricht. Erhöht man V1 auf 100 L, so erreicht man einen Wert von 1,04. Dies bedeutet, dass bei einer Pendelbewegung 5 bzw. 4% vom Gesamtgasvolumen durch die Luftfedereinheit (7.2) verdrängt werden

Idealerweise ist der Gas-Speichertank (7.5) in der unteren Pendelstange integriert. Es kann jedoch auch ein separater Zusatztank, mitschwingend oder stationär, zur Aufnahme des Luftvolumens verwendet werden. Dieser muss dann mit einer entsprechenden Rohrleitung mit der Luftfedereinheit (7.1) verbunden werden. Bei mitschwingendem Speicher kann das eine feste Rohrleitung sein. Bei separat angebrachtem Speicher ist ein flexibler Schlauch (7.10) erforderlich.

Bei beispielsweise großer Krafteinleitung bzw. Entlastung durch die untere Pendelstange (5) auf die Masse (1) neigt die Masse dazu, der Kraft auszuweichen, was eine kreisförmige Bewegung des Pendels und damit wiederum eine hier nicht gewünschte Frequenzerhöhung zur Folge hat. Deshalb ist es vorteilhaft, die erste Pendelstange (4) deutlich kürzer oder länger zu halten als die zweite Pendelstange (5). Somit ist die Pendelrückstellkraft der ersten Pendelstange größer als die durch die Kraft der an der zweiten Pendelstange entstehenden Querkomponente, so dass wieder eine lineare Schwingbewegung erreicht wird. Es hat sich nun gezeigt, dass es vorteilhaft ist, z.B. die zweite Pendelstange (5) mit der Stützvorrichtung (7) etwa um den Faktor 1,5 - 2 länger auszuführen als die obere Pendelstange (4). Es ist aber auch möglich, die zweite Pendelstange (5) entsprechend kürzer zu machen.

Durch das Anheben bzw. Entlasten der Masse über den Gasdruck wird die Eigenfrequenz des Systems reduziert. Wird der Balg drucklos, so wird die Frequenz des ersten (kurzen) Pendels (4) erreicht. Bei zum Beispiel 0,8 m Pendellänge (4.1) beträgt die drucklose Frequenz des Systems ca. 0,56 Hz. Diese Frequenz kann durch Einpressen von Gas (Luft) in das System reduziert werden. So kann man zum Beispiel bei einem Druck mit der Wirkung von etwa 70 % der Gewichtskraft des Pendels eine Frequenz von 0,1 HZ erreichen. Auch durch die Pendellänge (4.1) kann Einfluss auf die Frequenz genommen werden. Somit kann das System als frequenzadaptiver Tilger eingesetzt werden.

Bei bestimmten Ausführungsformen der Stützvorrichtung (7), z.B. mit dem Pneumatik-Zylinder (7.2), ist es umgekehrt auch möglich durch Druck gegen die Schwingungsmasse (1), deren Gewichtskraft relativ zu erhöhen, was zu einer (relativen) Erhöhung der Eigenfrequenz der Schwingung des Pendels führt. Damit kann das Schwingungssystem frequenzmäßig auf sowohl höhere als auch niedrigere Werte einjustiert werden.

Bei Schwingungen mit variabler Frequenz, wie zum Beispiel Wellenanregung von Windkraftanlagen oder auch Schiffen und sonstigen Offshore Bauten, kann die Frequenz der Anregung durch Sensoren gemessen und das System proportional zu dieser Frequenz auch durch Variation des Luftdruckes in den Stützvorrichtungen (7) an die Störfrequenz angepasst werden.

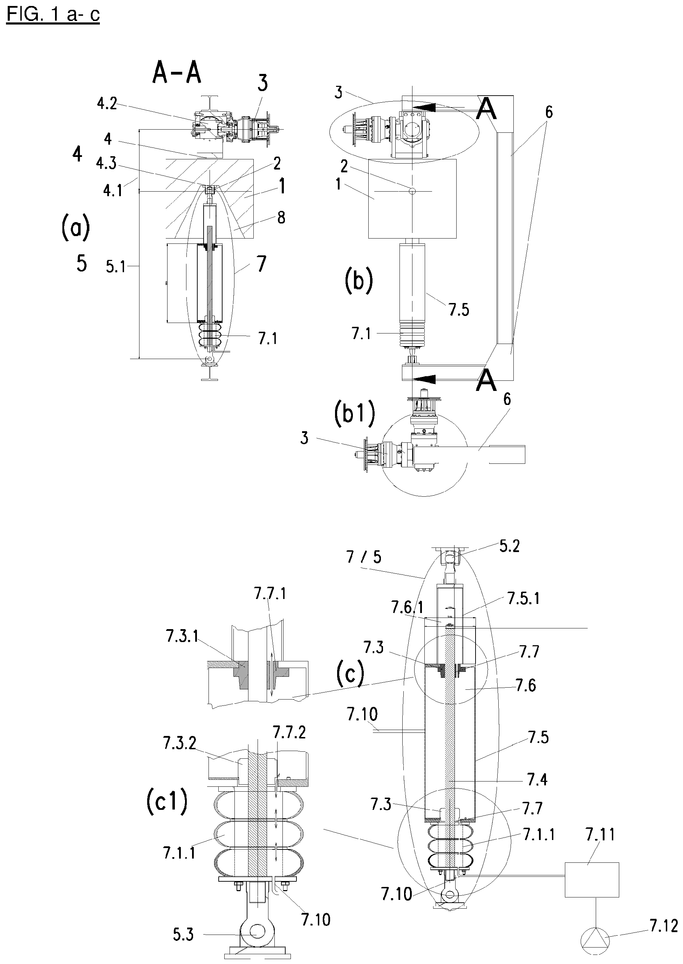

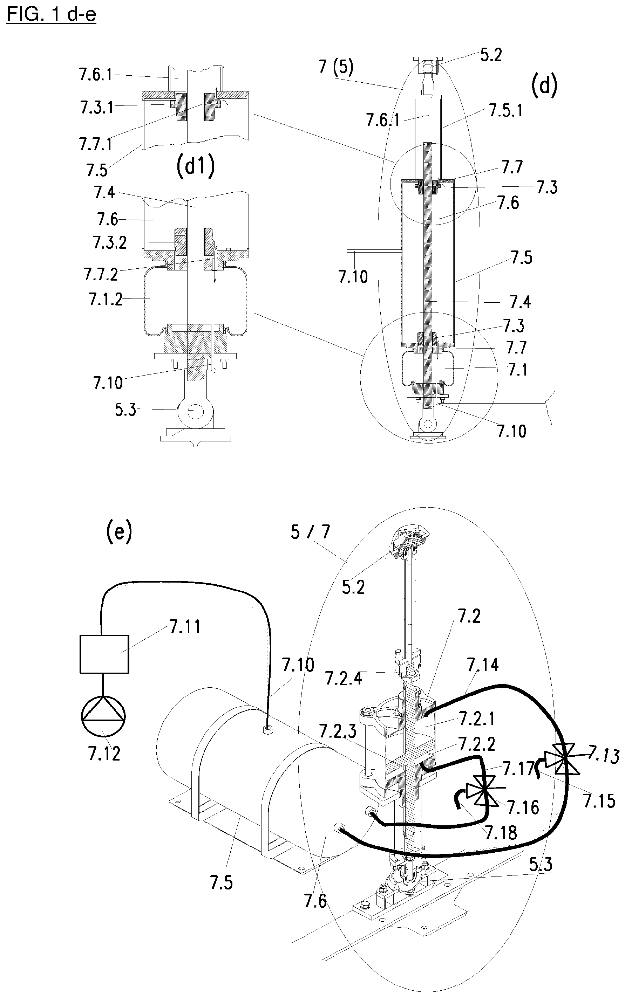

Fig. 1 (a-e) zeigt verschiedene Ausführungsformen der Erfindung, welche jeweils eine (erste) obere Pendelstange aufweisen, sowie eine zweite (untere) Pendelstange (5), wobei die Stützvorrichtung als Teil der zweiten (unteren) Pendelstange ausgebildet ist, und entweder eine Luftfedereinheit (7.1) in Form eines elastischen Balgs (7.1.1) oder Roll-Balgs (7.1.2), oder alternativ ein Pneumatik-Zylinder (7.2) aufweist.

Fig. 1(a) zeigt eine Seitenansicht des erfindungsgemäßen Pendel-Schwingungstilgers. Die Schwingungsmasse (1) ist an einer oberen ersten Pendelstange. Das Gelenk (4.3)(5.2) verbindet die erste Pendelstange mit einer zweiten unteren Pendelstange (5) mit der Länge (5.1). Die Schwingungsmasse (1) ist dabei an ihrer Unterseite so gestaltet, dass sie den oberen Teil der Stützfedereinheit (7) nicht nur umschließt, sondern auch so viel Freiraum (8) lässt, dass diese Pendelbewegungen ohne Anstoßen mitmachen kann. Dazu kann in der Masse eine entsprechende Bohrung oder Aussparung vorgesehen sein; die Masse kann aber auch aus entsprechend geformten und angeordneten Einzelelementen um den Freiraum (8) herum zusammengefügt sein.

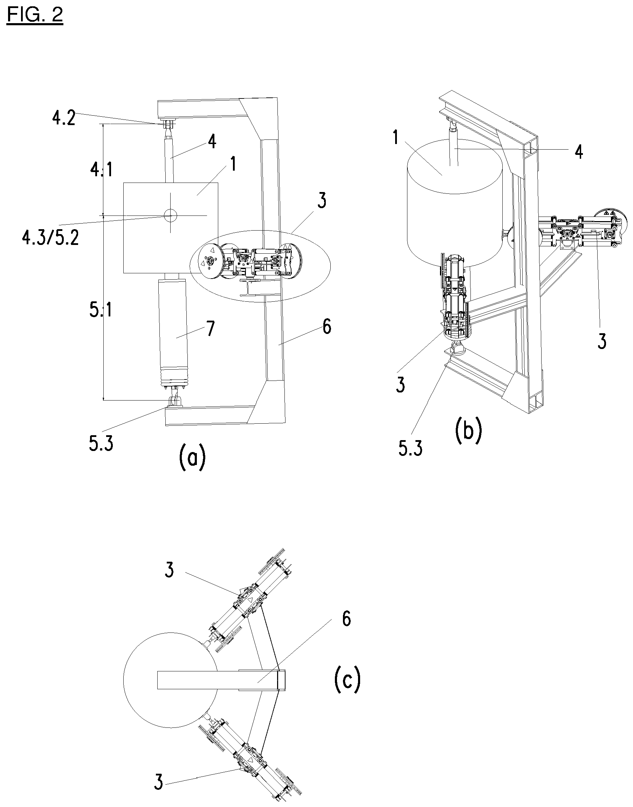

Die obere Pendelstange (4) mit der Länge (4.1) besitzt ein oberes Gelenk (4.2), über das es an die Trägereinheit des Systems angebunden ist (nicht gezeigt). Das obere Gelenk ist in dieser Ausführungsform ein Kardangelenk, in das zusätzlich ein Rotationsdämpfer (3) integriert ist. Ein solches Dämpfer-Gelenk ist beispielsweise aus der WO 2019/201471 bekannt. Prinzipiell können aber auch einfache und ungedämpfte Gelenke, wie Kugelgelenke Verwendung finden (Fig.2). Das obere Pendel wird durch die Länge zwischen den Drehachsen des Kardangelenks und dem Schwerpunkt (2) der Masse (1) gebildet, welcher sich vorzugsweise in der Nähe des Gelenks (4.3)(5.2) befindet oder mit diesem identisch ist. Die untere Pendelstange (5) mit der Länge (5.1) wird durch die Stützvorrichtung (7), repräsentiert. Die Stützvorrichtung umfasst dabei eine Luftfedereinheit (7.1) mit integrierten Gas- Luftbehälter (7.5), in dem sich ein Gas/Luft-Gemisch (7.6)(7.6.1) befindet. Der Behälter (7.5) ist im oberen Teil verjüngt (7.5.1), damit dieser Teil mehr oder weniger tief in den Freiraum (8) der Masse (1) eingeführt werden kann und dort zusammen mit der Pendelstange (5) frei beweglich ist. Die Pendelstange (5) endet im oberen Teil mit dem Gelenk (5.2)(4.3). Die Position dieses Gelenkes sollte im optimalen Fall im Schwerpunkt (2) der Masse sein.

Die Stützvorrichtung (7) als integraler Bestandteil der unteren Pendelstange (5) weist am unteren Ende ein weiteres Gelenk, vorzugsweise ein Kugelgelenk auf, welches die Verbindung zur zu dämpfenden Struktur, bzw. zum Trägerelement (6) der Struktur herstellt. , Die Anbindung an die Trägereinheit ist hier jedoch nicht gezeigt.

Aus der Zeichnung gehen auch die unterschiedlichen Längen (4.1)(5.1) der Pendelstangen (4) und (5) hervor.

Fig. 1(b) zeigt eine um 90° gedrehte Seitenansicht der Ausführungsform der Fig. 1(a). Zusätzlich ist hier eine Trägeranordnung oder ein Trägergestell (6) abgebildet, welche über die Gelenke (4.2) und (5.3) mit der vollständigen erfindungsgemäßen Pendel-Schwingungstilger verbunden ist.

Fig. 1(b1) zeigt eine Draufsicht der Fig. 1(b) und zwar ein Kardangelenk mit Anbindung an eine Trägerstruktur (6), wobei das Kardangelenk mit zwei Rotationsdämpfereinheiten (3) ausgerüstet ist, die im 90° Winkel zueinander versetzt angeordnet sind.

Fig. 1(c)(c1) zeigt weitere Details der erfindungsgemäßen Stützvorrichtung (7) aus Fig. 1(a). Das Bauteil setzt sich zusammen aus dem Behälter oder Speicher (7.5) zur Aufnahme eines Gas- oder von Luftvolumens (7.6) über eine Ein-/Auslassvorrichtung (7.10). Der Behälter (7.5) ist hier aufgeteilt in einen oberen schmaleren Behälterteil (7.5.1) mit einem entsprechenden Volumen (7.6.1) und einen größeren unteren Behälterteil (7.5) mit dem Volumen (7.6). Beide Behälterteile sind über einen Gasdurchlass (7.7.1) miteinander druckmäßig verbunden. Es ist auch möglich anstelle der Aufteilung in ein oberes kleines und ein unteres größeres Kompartiment einen einzigen durchgehenden aber nach oben verjüngten Behälter einzusetzen, um ausreichend Platz im Freiraum (8) im Bereich der Masse (1) zu haben.

Im unteren Bereich der Stützvorrichtung (7) ist die Luftfedereinheit (7.1) angeordnet, welche durch einen unteren Gasdurchlass (7.7)(7.7.2) mit dem Behälter (7.5) bzw. über einen oberen Gasdurchlass (7.7)(7.7.1) mit dem Zusatz-Behälter (7.5.1) druckmäßig in Verbindung steht. Die Luftfedereinheit (7.1) umfasst in dieser Variante drei elastische Bälge (7.1.1), die bei Druckänderung in den Behältern (7.5)(7.5.1) in vertikaler Richtung sich entsprechend ausdehnen oder komprimiert werden und so bewirken, dass sich die Gewichtskraft der oberhalb an der Pendelstange (4) positionierten und befestigten Masse (1)(hier nicht gezeigt) entsprechend ändert.

Üblicherweise werden 1 - 15, vorzugsweise 3 - 10, solcher übereinandergestapelter Bälge eingesetzt, um die erforderliche Reduzierung der Gewichtskraft der Masse (1) zu ermöglichen. Letztlich hängt dies aber von der Masse, den Volumina (7.6)(7.6.1) und dem Verdrängungsvolumen durch die elastischen Bälge ab.

Das untere Ende der Stützvorrichtung (7) weist wiederum ein Kugelgelenk (5.3) auf, welches mit der hier nicht gezeigten Trägerstruktur des Schwingungssystems verbunden ist.

Die als Stützfedereinheit konzipierte Stützvorrichtung (7) weist zudem in dieser Ausführungsform eine Führungsstange (7.4) auf, die dazu dient, dem Bauteil ausreichende Stabilität zu verleihen, da es sonst im Bereich des Balges bei Belastung knicken würde. Die Führungsstange (7.4) wird dabei vorzugsweise in Gleitlagern (7.3)(7.7) geführt, wobei im konkreten Fall ein oberes Gleitlager (7.3.1) zwischen unterem Behälter (7.5) und oberen Behälter (7.5.1) und ein unteres Gleitlager (7.3.2) zwischen Luftfedereinheit (7.1.1) und unterem Behälter (7.5) eingesetzt wird.

Der Luftanschluss (7.10) kann an jede Position des luftgefüllten oder gasgefüllten Raums (7.6) (7.6.1) angeschlossen werden. Vorteilhaft ist es diesen im unteren Bereich der Stützfedereinheit, in dem wenig Bewegung stattfindet, anzubringen. Gleichzeitig kann mit einem Schlauch oder einer Rohrverbindung ein weiterer Behälter zur Vergrößerung des Volumens angeschlossen werden. Am unteren Ende der Stützfedereinheit ist eine weitere Einlass-/Auslassvorrichtung (7.10) vorgesehen, welche eine Regelungseinheit (7.11) aufweist. Im einfachsten Fall ist dies ein Regelventil.

Die hier beschriebene Stützfedereinheit funktioniert in der Weise, dass durch vertikale Veränderung des Volumens des elastischen Balgs (7.1.1), der Teil der darüberliegenden Einheit mit dem Gas- / Luftbehälter (7.5)(7.5.1) entlang der Führungsstange (7.4) in Richtung des Gelenks (5.2) gedrückt. Da das Gelenk (5.2), welches vorzugsweise als Kugelgelenk ausgebildet ist, hier identisch mit dem Gelenk (4.3) der oberen ersten Pendelstange (4) ist, an dem die Schwingungsmasse (1) befestigt ist, wird so die entsprechende Druck- oder Zugkraft auf die Schwingungsmasse (1) ausgeübt, so dass dadurch eine gezielte Frequenzanpassung an das Schwingungssystem vorgenommen werden kann.

Eine weitere Möglichkeit ist es, eine automatische Druck-Regeleinheit anzubauen mit deren Hilfe manuell oder automatisch der voreingestellte Druck im Federsystem (7), ggf. mit Hilfe von Sensoren, bei Änderungen der äußeren Bedingungen im Schwingungssystem, an die geänderte Eigenfrequenz angepasst werden kann. Dies hat zum einen den Vorteil, dass beispielsweise durch mögliche Temperaturschwankungen verursachte Druckänderungen ausgeglichen werden können. Weiterhin kann über eine solche Regelvorrichtung die Eigenfrequenz des Schwingungstilgers laufend an die Erfordernisse angepasst werden (adaptiver Betrieb). Die Druckregeleinheit zur Aufrechterhaltung eines konstanten Luftdrucks kann z.B. aus einem Drucksensor, einem 3 Wege-Servo-Ventil und einem Kompressor bestehen. Der Drucksensor überwacht dabei kontinuierlich den Druck im Behälter (7.5)(7.5.1). Die Steuerung berücksichtigt vorteilhafterweise nur den maximalen Druck, welcher immer entsteht, wenn obere und untere Pendelstangen in Linie zueinander stehen und damit das kleinste Luftvolumen im Bewegungsablauf zur Regelung verwendet wird. Es empfiehlt sich zudem, die Anpassung nur dann automatisch durchführen zu lassen, wenn bestimmte maximale oder minimale Grenzwerte über- oder unterschritten werden. Die Regelung vergleicht diesen Druck mit dem vorgegebenen Sollwert und öffnet oder schließt entsprechend das Ventil, um den Gasdruck im Behälter über einen Kompressor oder über Pressluft-Speicher zu erhöhen oder zu erniedrigen. Der vorgegebenen Sollwert ist entweder eine fest einstellbare Größe oder er wird für einen adaptiven Betrieb von einer Steuereinheit vorgegeben.

Die Schwingfrequenz des Turmes wird von einem Beschleunigungssensor erfasst. Das Signal wird an eine Recheneinheit weitergegeben. Der zum Erreichen der jeweiligen Frequenzen erforderliche Luftdruck des Systems wird in einer vorher ermittelten Frequenz-Druck Kurve des Systems berechnet. Das sich daraus ergebende Signal wird an das DruckRegelventil als Sollwert weitergegeben.

Fig. 1(d)(d1) zeigt eine weitere Ausführungsform der Erfindung. Anstelle der als Anordnung von elastischen Bälgen (7.1.1) ausgebildeten Luftfedereinheit (7.1) wird nun ein Roll-Balg (7.1.2) eingesetzt, der den Vorteil hat, dass sich sein Querschnitt im Betrieb nicht wesentlich ändert. Ansonsten entsprechen alle anderen Merkmale und Funktionen denen der Figur 1(c)(c1).

Fig. 1(e) zeigt eine weitere Ausführungsform der Erfindung, und zwar einen Pneumatik-Zylinder (7.2) als Bestandteil einer unteren Pendelstange (5) des erfindungsgemäßen Pendel-Schwingungstilgers. Die obere Pendelstange (4) mit der Schwingungsmasse (1) ist nicht gezeigt. Die Pendelstange (5) besitzt ein oberes Gelenk (5.2), welches als Kugelgelenk ausgebildet ist. Das Gelenk ist gleichzeitig das untere Gelenk (4.3) der oberen Pendelstange (4). Der Pneumatik-Zylinder (7.2) umfasst einen Kolben (7.2.3), welcher den Zylinderraum in eine obere Zylinderkammer (7.2.1) und eine untere Zylinderkammer (7.2.2) teilt. Der Kolben (7.2.3) wird durch Kolbenstange (7.2.4) bewegt. Die vertikale Bewegung des Kolbens erfolgt durch das druckkontrollierte Gas- / Luftvolumen (7.6). Da der Zylinderraum zu klein ist, wird ein Luft-/Gasbehälter (7.5) außerhalb des Bauteils benötigt, um die Funktionalität des Pneumatik-Zylinders im Sinne einer selektiven und genauen Frequenzanpassung zu gewährleisten. Das Gasvolumen im Behälter (7.5) wird je nach Erfordernis entweder in die untere oder in die obere Kammer des Zylinders unter Druck geleitet. Es sind entsprechende Ventile (7.13)(7.16) sowie Zu- und Ableitungen (7.10) (7.14)(7.15)(7.17)(7.18) vorgesehen, sowie auch hier eine Regel und Steuereinheit (7.11)(7.12) für das Gas- / Luftvolumen (7.6). Im Betrieb wird die Kolbenstange (7.2.4) durch den entsprechenden Gasdruck vertikal nach oben oder unten geschoben, wodurch über das Kugelgelenk (5.2) die Schwingungsmasse (1) an der Pendelstange (4) entlastet oder belastet. Generell kann der Pneumatik Zylinder (7.2) in Zug-Richtung und in Druck-Richtung arbeiten. Für Druck wird die Kammer 7.2.2 beaufschlagt, und für Zug wird die Kammer 7. 2.1 beaufschlagt.

Fig. 2 (a-c) zeigt aus verschiedenen Perspektiven die Ausführungsform des erfindungsgemäßen Schwingungstilgers mit einer Luftfedereinheit (7.1) der Fig. 1 eingebunden in die Trägerkonstruktion (6). Zum Unterschied hierzu, ist das Gelenk (4.2) der Pendelstange (4) ein einfaches Kugelgelenk ohne Dämpfungseinheiten (3). Letztere sind dafür in zweifacher Ausfertigung und in einem 90° Winkel zueinander zwischen Masse (1) und der Trägerkonstruktion (6) eingebaut. Als Dämpfungseinheiten sind hier wiederum Rotationsdämpfer vorgesehen; es können aber auch Lineardämpfer auf Magnetbasis, Hydraulikdämpfer oder sonstige Dämpfer nach dem Stand der Technik verwendet werden.

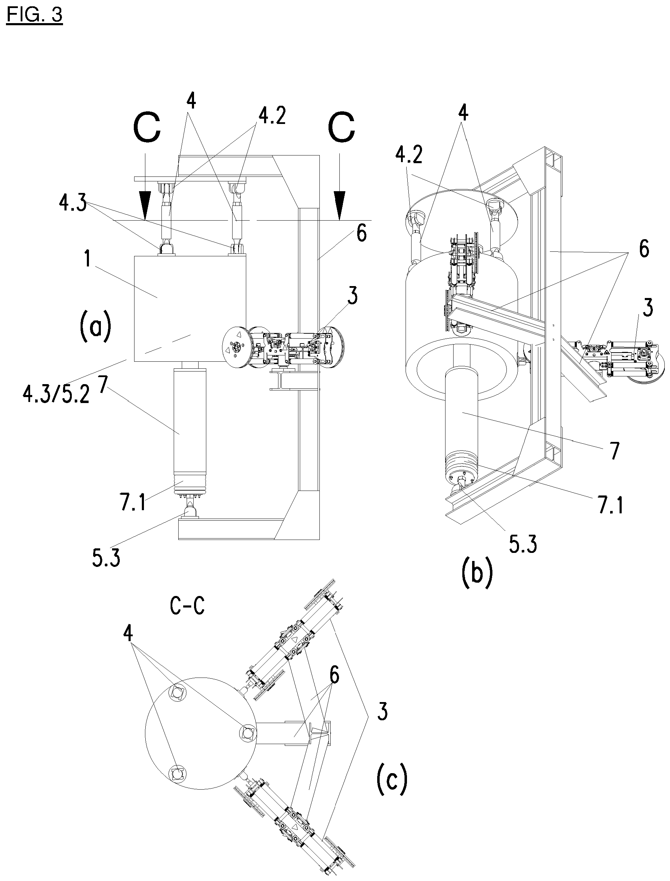

Fig. 3 (a-c) zeigt drei verschiedene Ansichten einer andere Ausführungsform des erfindungsgemäßen Tilgers, und zwar einen Transversal-Pendeltilger. Die Masse (1) ist hier an drei Pendelstangen (4) aufgehängt. Jede Pendelstangen (4) hat ein oberes (4.2) und ein unteres Gelenk (4.3), vorzugsweise ein Kugelgelenk (4.3). Mit den oberen Gelenken sind die Pendelstangen mit der Trägerkonstruktion (6) und mit den unteren Gelenken mit der Masse (1) in der Weise verbunden, dass die Masse beim Schwingen sich ausschließlich horizontal bewegen kann. Die Dämpfungselemente (3) sind hier zwischen Masse (1) und Trägerstruktur (6) angebracht und im konkreten Beispiel wieder als Rotationsdämpfer gestaltet, können aber auch andere Dämpfer des Standes der Technik sein. Für eine im Umfang gleichmäßige Dämpfung reichen bei dieser Ausführungsform mit drei Pendelstangen (4) und sechs Gelenken (4.2)(4.3) in der oberen Aufhängung zwei Dämpfungselemente (3). Es können aber auch drei und mehr derartiger Dämpfer eingesetzt werden.

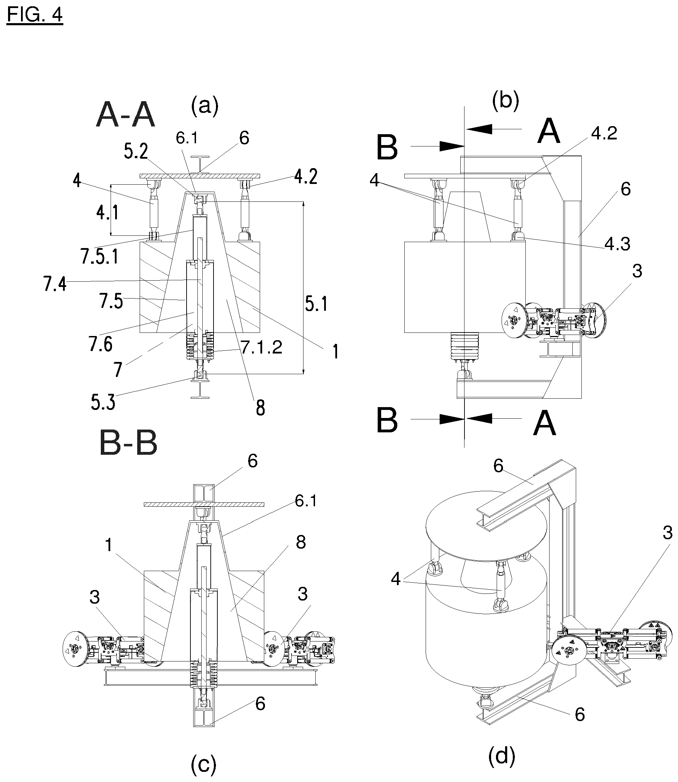

Fig. 4 (a-d) zeigt vier verschiedene Ansichten einer andere Ausführungsform des Transversal-Tilgers gemäß Fig. 3. Die als Stützfeder- oder Luftfedereinheit konzipierte Stützvorrichtung (7) muss beim Transversalpendel nicht zwingend oder zumindest wünschenswerterweise im Schwerpunkt der Masse oder in unmittelbare Nähe hierzu wirken. Somit ist es möglich diese oberhalb der Masse angreifen zu lassen und somit durch die Masse durchzuführen damit ergibt sich eine geringere Höhe des Bauteils, was wiederum den erforderlichen Einbauraum verringert.

Fig. 4(a) zeigt, wie die Stützfedereinheit (7) durch eine Öffnung der Masse (1) hindurchgeführt ist. Das obere Gelenk (5.2) der Pendelstange (5), die hier identisch ist mit der Stützvorrichtung (7), ist nun oberhalb der Schwingungsmasse (1) angeordnet und an einer Halterung (6.1) befestigt, welche wiederum mit der Masse verbunden ist. Die Öffnung in der Masse ist so gestaltet, dass sie ausreichenden Freiraum für die Bewegung des unteren Pendels (5) bzw. der Stützfedereinheit (7) zulässt. Auch bei dieser Ausführungsform ist zu erkennen, dass die oberen Pendelstangen (4) eine deutlich kleinere Länge (4.1) im Vergleich zu der Länge (5.1) der unteren Pendelstange (5).

Fig. 4(b) zeigt eine seitliche Sicht des erfindungsgemäßen Schwingungstilgers gemäß Fig. 4(a). Zusätzlich ist noch eine Rotations-Dämpfereinheit (3) mit drei Rotationsscheiben zu sehen, welche an der Masse befestigt ist, und bei schwingenden Bewegung derselben wirksam wird.

Fig. 4(c) zeigt einen Schwingungstilger gemäß Fig. 4 (a) im Schnitt.

Fig. 4(d) zeigt das Bauteil gemäß Fig. 4(c) in einer perspektivischen Sicht.

In den Figuren 2 - 4 umfasst die Stützvorrichtung (7) jeweils ein erfindungsgemäßes

Luftfederelement (7.1). Es ist jedoch vorgesehen, die gleichen Ausführungsformen wie abgebildet und beschrieben, jedoch mit einem Pneumatik-Zylinder (7.2) gemäß Fig. 1 (e) einzusetzen.

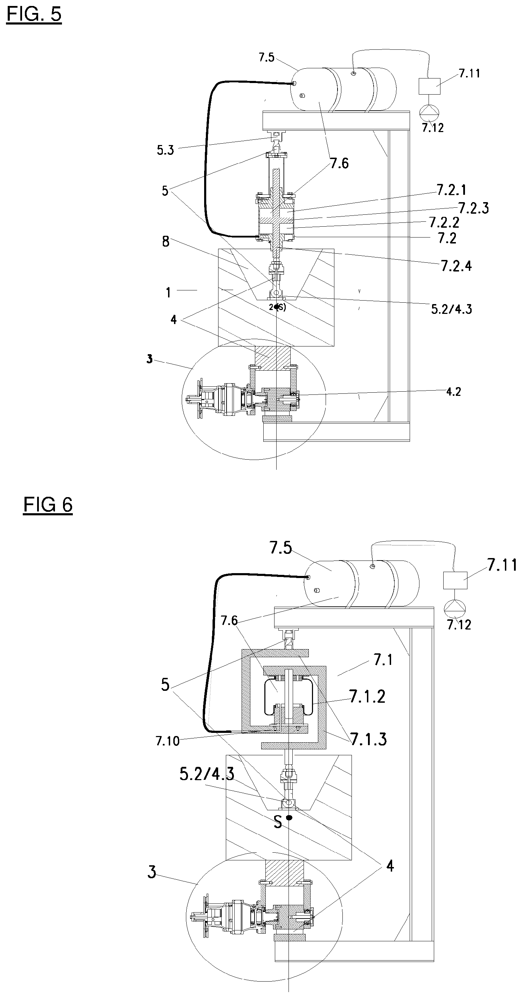

Fig. 5 zeigt einen erfindungsgemäßen Pendel-Schwingungstilger mit einem Pneumatik-Zylinder (7.2) als Kernstück der Stützvorrichtung (7). Im Unterschied zur Fig. 1(e), die nur die zweite (untere) Pendelstange (5) mit dem Pneumatik-Zylinder (7.2) zeigt, ist bei dieser Ausführungsform die zweite Pendelstange (5) mit einem entsprechenden Pneumatik-Zylinder (7.2) als obere Pendelstange (5) und die erste Pendelstange (4) mit der Schwingungsmasse (1) als untere Pendelstange (4) vorgesehen. Ein Kugel- oder Kardangelenkes (4.2) mit einem Rotations-Dämpfungselement (3) ist entsprechend am unteren Ende der Trägerstruktur (6) angeordnet, während ein freibewegliches Gelenk (5.3) nunmehr die Stützvorrichtung nach oben abschließt und dort mit der Trägerstruktur verbunden ist. Die Form und Anordnung der Schwingungsmasse (1) an der Pendelstange (4) in Bezug auf die Anordnung der Pendelstange (5) entspricht etwa des entsprechenden Teils der Figur 4.

Fig. 6 zeigt prinzipiell die gleiche Anordnung eines erfindungsgemäßen Pendel-Schwingungstilgers gemäß Fig. 5, jedoch ist hier der Pneumatik-Zylinder (7.2) durch eine Luftfedereinheit (7.1), insbesondere einen Roll-Balg (7.1.2) ersetzt. Dieser leitet die Kraft über die relativ zueinander beweglichen Bauteile (7.1.3) an die Masse (1) an der unteren ersten Pendelstange (4) weiter.

## Patentansprüche

1. Adaptiver Pendel-Schwingungstilger zur anpassbaren Dämpfung von auftretenden Schwingungen niedriger Frequenzen < 2 Hz in hohen schlanke Strukturen, umfassend
(i) mindestens eine im betriebsfreien Zustand senkrecht angeordnete erste Pendelstange (4) mit einer Länge (4.1), welche mit ihrem einen Ende über ein Gelenk (4.2) unmittelbar oder über ein Trägerelement (6) mit der zu dämpfenden Struktur verbunden ist,
(ii) mindestens eine im betriebsfreien Zustand senkrecht angeordnete zweite Pendelstange (5) mit einer Länge (5.1), welche ganz oder teilweise unterhalb oder oberhalb der ersten Pendelstange (4) angeordnet ist, **dadurch gekennzeichnet, dass** die zweite Pendelstange mit ihrem einen Ende über ein Gelenk (5.3) unmittelbar oder über ein Trägerelement (6) mit der zu dämpfenden Struktur verbunden ist,
wobei besagte erste Pendelstange (4) an ihren freien Ende über ein freibewegliches Gelenk (4.3)(5.2) direkt oder indirekt mit dem freien Ende der zweiten Pendelstange (5) verbunden ist,
(iii) eine Schwingungsmasse (1), welche an der ersten Pendelstange (4) befestigt ist und über das Gelenk (4.3)(5.2) mit der zweiten Pendelstange (5) so verbunden ist, dass bei Krafteinwirkung auf die Masse (1) beide Pendelstangen (4)(5) zusammen bewegt werden, und
(iv) eine druckkontrollierte Stützvorrichtung (7), welche die
Gewichtskraft der Schwingungsmasse (1) durch Entlastung oder Belastung zu erhöhen oder zu vermindern vermag und so gezielt Frequenzänderungen erreicht werden können, wobei die Stützvorrichtung integraler Bestandteil der zweiten Pendelstange (5) ist.

2. Adaptiver Schwingungstilger nach Anspruch 1, **dadurch gekennzeichnet, dass** die Stützvorrichtung (7) mit einem Gas-/ Luftvolumen (7.6) betrieben wird, welches unter einem Druck steht, der eine Gewichtskraftänderung der Schwingungsmasse (1) bewirkt, wobei besagtes Gas-/Luftvolumen in einem Gas-/ Luftbehälter (7.5) bereitgestellt wird, welcher vollständig integraler Bestandteil der Stützvorrichtung ist oder teilweise separat davon angebracht ist.

3. Adaptiver Pendel-Schwingungstilger nach Anspruch 1 oder 2, **dadurch gekennzeichnet, dass** die Stützvorrichtung (7) ein Luftfederelement (7.1) oder ein Pneumatik-Zylinder (7.2) ist.

4. Adaptiver Pendel-Schwingungstilger nach Anspruch 3 , **dadurch gekennzeichnet, dass** das Luftfederelement (7.1) ein elastischer Balg oder eine Anordnung von mehreren übereinander gestapelten elastischen Bälgen (7.1.1), ein Roll-Balg oder eine Anordnung von hintereinander angeordneten Roll-Bälgen (7.1.2) ist.

5. Adaptiver Schwingungstilger nach einem der Ansprüche 1 - 4, **dadurch gekennzeichnet, dass** die Länge (4.1) der mindestens einen ersten Pendelstange (4) unterschiedlich ist zur Länge (5.1) der zweiten Pendelstange (5).

6. Adaptiver Schwingungstilger nach einem der Ansprüche 1 - 5, **dadurch gekennzeichnet, dass** die mindestens erste Pendelstange (4) ganz oder teilweise ein oberes Pendel und die mindestens zweite Pendelstange (5) ganz oder teilweise ein unteres Pendel darstellt, und beide Pendelstangen über ein gemeinsames Gelenk (4.3)/(5.2) miteinander verbunden sind.

7. Adaptiver Schwingungstilger nach einem der Ansprüche 1 - 5, **dadurch gekennzeichnet, dass** die mindestens erste Pendelstange (4) ganz oder teilweise ein unteres Pendel, und die mindestens zweite Pendelstange (5) ganz oder teilweise ein oberes Pendel darstellt, und beide Pendelstangen über ein gemeinsames Gelenk (5.2)/(4.3) miteinander verbunden sind.

8. Adaptiver Schwingungstilger nach einem der Ansprüche 1 - 7, **dadurch gekennzeichnet, dass** das Gelenk (4.2) und / oder (5.3) ein Kardangelenk ist, und das das Gelenk (4.3)(5.2) ein Kugelgelenk ist.

9. Adaptiver Schwingungstilger nach einem der Ansprüche 1 - 8 **dadurch gekennzeichnet, dass** die Stützvorrichtung (7) eine Führungsstange (7.4) aufweist.

10. Adaptiver Schwingungstilger nach einem der Ansprüche 1- 9, **dadurch gekennzeichnet, dass** er eine Druckregeleinheit (7.11)(7.12) umfasst, welche Druckschwankungen, die durch geänderte äußere Bedingungen während des Betriebes verursacht werden, durch Erhöhung oder Absenkung des Druckes des Gas/-Luftvolumens (7.6) über einen Anschluss (7.10) bei Erreichen von voreingestellten Grenzwerten auszugleichen vermag.

11. Adaptiver Schwingungstilger nach einem der Ansprüche 1 - 10, **dadurch gekennzeichnet, dass** die Schwingungsmasse (1) so an der ersten Pendelstange (4) befestigt ist, dass sich ihr Schwerpunkt (2) in der Nähe des Gelenkes (4.3)(5.2) befindet oder mir diesem identisch ist.

12. Adaptiver Schwingungstilger nach Anspruch 11, **dadurch gekennzeichnet, dass** die Masse (1) dreidimensional so gestaltet ist, dass ein entsprechend geformter Freiraum (8) vorliegt, in dem die zweite Pendelstange (5) mit ihrem Gelenk (5.2) mindestens teilweise hineinreicht und Platz für Pendelbewegungen im Betriebszustand gegeben ist.

13. Adaptiver Schwingungstilger nach einem der Ansprüche 1 - 12 als zweidimensionaler Transversal -Tilger, **dadurch gekennzeichnet, dass** die Schwingungsmasse (1) über zwei oder mehr Gelenke (4.3) an gleichviele gleichlange erste Pendelstangen (4) und über das Gelenk (5.2) mit der zweiten Pendelstange (5) verbunden ist, so dass sie in der horizontalen Ebene bewegbar ist.

14. Adaptiver Schwingungstilger nach einem der Ansprüche 1 -13, **dadurch gekennzeichnet, dass** er mindestens eine weitere Dämpfungseinheit (3) aufweist, welche am Gelenk (4.2) der ersten Pendelstange (4) und / oder am Umfang der Schwingungsmasse (1) angebracht ist.

15. Adaptiver Schwingungstilger nach Anspruch 14, **dadurch gekennzeichnet, dass** die mindestens eine weitere Dämpfungseinheit (3) ein Rotationsdämpfer ist.

16. Adaptiver Schwingungstilger nach einem der Ansprüche 1 -15, **dadurch gekennzeichnet, dass** er an einer mobilen Trägerkonstruktion (6) angebracht ist, welche an einer Struktur während ihrer Errichtung oder ihres Rückbaus reversibel befestigt oder entfernt werden kann.

17. Windkraftanlage umfassend Gondel, Rotor und Turm, **dadurch gekennzeichnet, dass** sie einen Schwingungstilger gemäß einem der Ansprüche 1 - 16 aufweist, welcher außen oder innen, im oder am Turm oder an oder in der Gondel dauerhaft oder temporär befestigt ist.

## Claims

1. Adaptive pendulum vibration mass damper for adaptably damping occurring vibrations of low frequencies < 2 Hz in high, narrow structures, comprising
(i) at least one first pendulum rod (4), which has a length (4.1), is arranged perpendicularly in the idle state, and is connected, via a joint (4.2), at one end directly or via a carrier element (6) to the structure to be damped,
(ii) at least one second pendulum rod (5), which has a length (5.1), is arranged perpendicularly in the idle state, and is arranged entirely or partly below or above the first pendulum rod (4), **characterized in that** the second pendulum rod is connected, via a joint (5.3), at one end directly or via a carrier element (6) to the structure to be damped,
said first pendulum rod (4) being connected at its free end via a freely movable joint (4.3)(5.2) directly or indirectly to the free end of the second pendulum rod (5),
(iii) an vibration mass (1), which is attached to the first pendulum rod (4) and connected via the joint (4.3)(5.2) to the second pendulum rod (5) such that the two pendulum rods (4)(5) are moved together when force acts on the mass (1), and
(iv) a pressure-controlled support device (7), which can increase or reduce the weight of the vibration mass (1) by relieving or loading, and frequency changes can thus be selectively achieved, the support device being an integral component of the second pendulum rod (5).

2. Adaptive vibration mass damper according to claim 1,
**characterized in that** the support device (7) is operated with a gas/air volume (7.6) which is under a pressure that brings about a change in weight of the vibration mass (1), said gas/air volume being provided in a gas/air container (7.5), which is completely an integral component of the support device or is partly mounted separately therefrom.

3. Adaptive pendulum vibration mass damper according to claim 1 or 2, **characterized in that** the support device (7) is an air spring element (7.1) or a pneumatic cylinder (7.2).

4. Adaptive pendulum vibration mass damper according to claim 3, **characterized in that** the air spring element (7.1) is a resilient bellows or an arrangement of a plurality of resilient bellows (7.1.1) stacked one above the other, a roller bellows or an arrangement of roller bellows (7.1.2) arranged one behind the other.

5. Adaptive vibration mass damper according to any of claims 1 - 4, **characterized in that** the length (4.1) of the at least one first pendulum rod (4) is different from the length (5.1) of the second pendulum rod (5).

6. Adaptive vibration mass damper according to any of claims 1 - 5, **characterized in that** the at least first pendulum rod (4) entirely or partly constitutes an upper pendulum, and the at least second pendulum rod (5) entirely or partly constitutes a lower pendulum, and the two pendulum rods are interconnected via a common joint (4.3)/(5.2).

7. Adaptive vibration mass damper according to any of claims 1 - 5, **characterized in that** the at least first pendulum rod (4) entirely or partly constitutes a lower pendulum, and the at least second pendulum rod (5) entirely or partly constitutes an upper pendulum, and the two pendulum rods are interconnected via a common joint (5.2)/(4.3).

8. Adaptive vibration mass damper according to any of claims 1 - 7, **characterized in that** the joint (4.2) and/or (5.3) is a universal joint, **and in that** the joint (4.3)(5.2) is a ball joint.

9. Adaptive vibration mass damper according to any of claims 1 - 8, **characterized in that** the support device (7) has a guide rod (7.4).

10. Adaptive vibration mass damper according to any of claims 1 - 9, **characterized in that** it comprises a pressure-regulating unit (7.11)(7.12), which can compensate for pressure fluctuations, which are caused by changed external conditions during operation, by increasing or lowering the pressure of the gas/air volume (7.6) via a port (7.10) when preset limit values are reached.

11. Adaptive vibration mass damper according to any of claims 1 - 10, **characterized in that** the vibration mass (1) is attached to the first pendulum rod (4) such that its center of gravity (2) is in proximity to the joint (4.3)(5.2) or is identical thereto.

12. Adaptive vibration mass damper according to claim 11,
**characterized in that** the mass (1) is three-dimensionally designed such that there is a correspondingly shaped free space (8), into which the second pendulum rod (5) at least partly extends with its joint (5.2), and space for pendulum movements in the operating state is provided.

13. Adaptive vibration mass damper according to any of claims 1 - 12 as a two-dimensional transverse damper, **characterized in that** the vibration mass (1) is connected via two or more joints (4.3) to the same number of first pendulum rods (4) of equal length and via the joint (5.2) to the second pendulum rod (5) so that it can be moved in the horizontal plane.

14. Adaptive vibration mass damper according to any of claims 1 - 13, **characterized in that** it has at least one further damping unit (3), which is mounted on the joint (4.2) of the first pendulum rod (4) and/or on the perimeter of the vibration mass (1).

15. Adaptive vibration mass damper according to claim 14,
**characterized in that** the at least one further damping unit (3) is a rotational damper.

16. Adaptive vibration mass damper according to any of claims 1 - 15 **characterized in that** it is mounted on a mobile carrier structure (6), which can be reversibly attached to a structure during its erection or deconstruction or removed therefrom.

17. Wind turbine comprising nacelle, rotor, and tower, **characterized in that** it has a vibration mass damper according to any of claims 1 - 16, which is permanently or temporarily attached outside or inside, in or to the tower, or to or in the nacelle.

## Revendications

1. Amortisseur de vibrations pendulaire adaptatif pour l'amortissement adaptable de vibrations de basses fréquences < 2 Hz apparaissant dans des structures hautes et étroites, comprenant
(i) au moins une première tige pendulaire (4) disposée verticalement à l'état non fonctionnel, comportant une longueur (4.1) qui est reliée par l'une de ses extrémités à la structure à amortir directement par l'intermédiaire d'une articulation (4.2) ou par l'intermédiaire d'un élément de support (6),
(ii) au moins une seconde tige pendulaire (5) disposée verticalement à l'état non fonctionnel, comportant une longueur (5.1) qui est disposée entièrement ou partiellement en dessous ou au-dessus de la première tige pendulaire (4), **caractérisé en ce que** la seconde tige pendulaire est reliée par l'une de ses extrémités à la structure à amortir directement par l'intermédiaire d'une articulation (5.3) ou par l'intermédiaire d'un élément de support (6),
dans lequel ladite première tige pendulaire (4) est reliée à son extrémité libre directement ou indirectement à l'extrémité libre de la seconde tige pendulaire (5) par l'intermédiaire d'une articulation (4.3)(5.2) à mouvement libre,
(iii) une masse vibrante (1) qui est fixée à la première tige pendulaire (4) et qui est reliée à la seconde tige pendulaire (5) par l'intermédiaire de l'articulation (4.3)(5.2) de sorte que, lorsqu'une force est exercée sur la masse (1), les deux tiges pendulaires (4)(5) sont déplacées ensemble, et
(iv) un dispositif de soutien (7) contrôlé par la pression qui permet d'augmenter ou de diminuer le poids de la masse vibrante (1) par décharge ou charge et d'obtenir ainsi des modifications de fréquence ciblées, dans lequel le dispositif de soutien fait partie intégrante de la seconde tige pendulaire (5).

2. Amortisseur de vibrations adaptatif selon la revendication 1,
**caractérisé en ce que** le dispositif de soutien (7) fonctionne avec un volume de gaz/air (7.6) qui est sous une pression qui provoque une variation de poids de la masse vibrante (1), dans lequel ledit volume de gaz/air est fourni dans un réservoir de gaz/air (7.5) qui fait entièrement partie intégrante du dispositif de soutien ou qui est partiellement monté séparément de celui-ci.

3. Amortisseur de vibrations pendulaire adaptatif selon la revendication 1 ou 2, **caractérisé en ce que** le dispositif de soutien (7) est un élément formant ressort pneumatique (7.1) ou un vérin pneumatique (7.2).

4. Amortisseur de vibrations pendulaire adaptatif selon la revendication 3, **caractérisé en ce que** l'élément formant ressort pneumatique (7.1) est un soufflet élastique ou un ensemble de plusieurs soufflets élastiques (7.1.1) empilés les uns sur les autres, un soufflet roulant ou un ensemble de soufflets roulants (7.1.2) disposés les uns derrière les autres.

5. Amortisseur de vibrations adaptatif selon l'une des revendications 1 à 4, **caractérisé en ce que** la longueur (4.1) de l'au moins une première tige pendulaire (4) est différente de la longueur (5.1) de la seconde tige pendulaire (5).

6. Amortisseur de vibrations adaptatif selon l'une des revendications 1 à 5, **caractérisé en ce que** l'au moins première tige pendulaire (4) représente entièrement ou partiellement un pendule supérieur et l'au moins seconde tige pendulaire (5) représente entièrement ou partiellement un pendule inférieur, et les deux tiges pendulaires sont reliées entre elles par l'intermédiaire d'une articulation (4.3)/(5.2) commune.

7. Amortisseur de vibrations adaptatif selon l'une des revendications 1 à 5, **caractérisé en ce que** l'au moins première tige pendulaire (4) représente entièrement ou partiellement un pendule inférieur, et l'au moins seconde tige pendulaire (5) représente entièrement ou partiellement un pendule supérieur, et les deux tiges pendulaires sont reliées entre elles par l'intermédiaire d'une articulation (5.2)/(4.3) commune.

8. Amortisseur de vibrations adaptatif selon l'une des revendications 1 à 7, **caractérisé en ce que** l'articulation (4.2) et/ou (5.3) est un joint de Cardan, et **en ce que** l'articulation (4.3)(5.2) est un joint à rotule.

9. Amortisseur de vibrations adaptatif selon l'une des revendications 1 à 8 **caractérisé en ce que** le dispositif de soutien (7) présente une tige de guidage (7.4).

10. Amortisseur de vibrations adaptatif selon l'une des revendications 1 à 9, **caractérisé en ce qu'**il présente une unité de régulation de pression (7.11)(7.12) qui est capable de compenser des variations de pression provoquées par des conditions extérieures modifiées pendant le fonctionnement, en augmentant ou en diminuant la pression du volume de gaz/air (7.6) par l'intermédiaire d'un raccord (7.10) lorsque des valeurs limites préréglées sont atteintes.

11. Amortisseur de vibrations adaptatif selon l'une des revendications 1 à 10, **caractérisé en ce que** la masse vibrante (1) est fixée à la première tige pendulaire (4) de sorte que son centre de gravité (2) se trouve à proximité de l'articulation (4.3)(5.2) ou est identique à celle-ci.

12. Amortisseur de vibrations adaptatif selon la revendication 11, **caractérisé en ce que** la masse (1) est conçue en trois dimensions de sorte qu'il existe un espace libre (8) de forme correspondante dans lequel la seconde tige pendulaire (5) pénètre au moins partiellement avec son articulation (5.2) et il y a de la place pour des mouvements pendulaires dans l'état de fonctionnement.

13. Amortisseur de vibrations adaptatif selon l'une des revendications 1 à 12 en tant qu'amortisseur transversal bidimensionnel, **caractérisé en ce que** la masse vibrante (1) est reliée par l'intermédiaire de deux articulations (4.3) ou plus à un même nombre de premières tiges pendulaires (4) de même longueur et par l'intermédiaire de l'articulation (5.2) à la seconde tige pendulaire (5), de sorte qu'elle est mobile dans le plan horizontal.

14. Amortisseur de vibrations adaptatif selon l'une des revendications 1 à 13, **caractérisé en ce qu'**il présente au moins une autre unité d'amortissement (3) qui est montée sur l'articulation (4.2) de la première tige pendulaire (4) et/ou sur la périphérie de la masse vibrante (1).

15. Amortisseur de vibrations adaptatif selon la revendication 14, **caractérisé en ce que** l'au moins une autre unité d'amortissement (3) est un amortisseur rotatif.

16. Amortisseur de vibrations adaptatif selon l'une des revendications 1 à 15, **caractérisé en ce qu'**il est monté sur une structure de support mobile (6) qui peut être fixée ou retirée de manière réversible à une structure pendant sa construction ou son démantèlement.

17. Éolienne comprenant une nacelle, un rotor et une tour,
**caractérisée en ce qu'**elle présente un amortisseur de vibrations selon l'une des revendications 1 à 16, lequel est fixé de manière permanente ou temporaire à l'extérieur ou à l'intérieur, dans ou sur la tour ou sur ou dans la nacelle.
